# EUROPEAN PATENT SPECIFICATION

(11) **EP 2 181 043 B1**
(45) Date of publication and mention of the grant of the patent: **07.09.2016**
(21) Application number: 08796571.1
(22) Date of filing: 24.07.2008
(51) Int. Cl.: B65C 9/04, B29C 33/48

(54) **AUTOMATED FIBER PLACEMENT MANDREL JOINT CONFIGURATION**
GELENKVERBINDUNG EINES AUTOMATISIERTEN FASERPOSITIONIERUNGSDORNS
CONFIGURATION DE JOINT DE MANDRIN DE POSITIONNEMENT DE FIBRE AUTOMATISÉ

(30) Priority: 31.07.2007 US 831826
(43) Date of publication of application: 05.05.2010
(73) Proprietor: The Boeing Company, Chicago, IL 60606-1596 (US)
(72) Inventor: CLEARY, William, Russell, Jr., Mansfield, TX 76063 (US); FLING, Brian, K., Dallas, TX 75234 (US); BUTCHER, Michael, A., Mount Pleasant, South Carolina 29464 (US)
(74) Representative: Howson, Richard G.B.
(86) International application number: PCT/US2008/071057
(87) International publication number: WO 2009/018100

(56) References cited:
- WO-A2-2007/148301
- DE-A1- 10 331 358
- US-A- 4 475 976
- US-A- 4 815 383
- US-A1- 2002 157 785
- US-A1- 2006 145 049
- US-A1- 2007 016 336
- US-B1- 6 436 507

## Description

### TECHNICAL FIELD

This invention relates generally to joint configurations and specifically to automated fiber placement machine mandrel joint configurations.

### BACKGROUND OF THE INVENTION

Stringers are used quite often in the aerospace industry. A stringer is a structural member used in fuselage structures. Stringers are generally straight, long, narrow components of the structural skeleton of an aircraft which are joined to the skin of an aircraft to strengthen and stiffen, thus providing support and definition to the skin of the structure. Accordingly, stringers are preferably mounted to the interior portion of the skin of the aircraft in order to reinforce the skin. Stringers typically include an upward oriented crown structure, sometimes referred to as a hat or cap, and a pair of opposite side surfaces, all of which extend along the entire length of the stringer. The hat is preferably what is mounted and abuts the skin of an aircraft.

In the past, mandrel segments have been split between stringers. The segments are typically not fully assembled until arrival at the production location. They are then shimmed to be positioned as needed. When mandrel segments are split between stringers, the mark-off impact is high. Mark-off occurs during the composite curing process when any deviation of the surface of the mandrel fold completely transfers into the barrel. Thus, whatever is on the face sheet of the mandrel will show up in the barrel being produced. For example, if a piece of tape were left on the mandrel during curing, it would be visible on the barrel. If there is a mismatch in the mandrel segments and mark-off or a wrinkle occurs, it may cause fiber distortion which results in a weaker laminate. This is particularly problematic when the split occurs between the stringers because when such distortion or mark-off occurs, it is hard to replace or repair the stringers because of the positioning of the split. Accordingly, there is a need to find a means for splitting mandrel segments at a position other than between stringers such that wrinkling and mark-off impact may be minimized.

Structural members are typically connected via joints. Joints between structural members are often formed by overlapping two or more structural members, placing holes in the members and sending fasteners through the holes. Joints also can be formed by welding the structural members. When these joints are utilized, there is a potential for leakage which can result in defects in the laminate and possible transfer of abnormalities to the resultant part.
impact. In other embodiments, the configuration of the lap joint provides a gap between mandrel segments forming a mandrel, whereby tolerances are achieved without affecting the seal plane. The lap joint is preferably positioned parallel to a mold surface, and the first mandrel face sheet and second mandrel face sheet lie flat against each other protecting the seal plane embedded between the face sheets.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated by those skilled in the art that the conception and specific embodiment disclosed may be readily utilized as a basis for modifying or designing other structures for carrying out the same purposes of the present invention. It should also be realized by those skilled in the art that such equivalent constructions do not depart from the spirit and scope of the invention as set forth in the appended claims. The novel features which are believed to be characteristic of the invention, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present invention.

US4815383 discloses a missile body and related method for producing a missile body comprising a plurality of coaxially disposed contiguous body sections wherein each body section is a structure having a cross-sectional configuration corresponding to a respective cross section of the missile body, means for fixedly attaching the contiguous body sections together axially to form a hull, and an outer skin physically engaging the hull and constituting the outer skin of the missile body.

US2006/145049 discloses an aircraft barrel lay-up assembly is provided comprising a barrel mandrel assembly having a contiguous outer barrel lay-up surface. A minor barrel outer surface element is movable between a minor barrel engaged position and a minor barrel disengaged position and forms a minority portion of the contiguous outer barrel lay-up surface when in the engaged position. A major barrel outer surface element is movable between a major barrel engaged position and a major barrel disengaged position. The major barrel outer surface has a first major barrel surface end and a second major barrel surface end moving together to reduce an effective major barrel outer surface circumference when in the major barrel disengaged position. A composite ply assembly is formed around the barrel mandrel circumference and cured while coincident to form a composite barrel element.; The composite barrel element removable from said barrel mandrel assembly by way of moving major barrel outer surface element into the major barrel disengaged position such that a sliding gap is formed.

Document DE-A-103 31 358 discloses a mandrel assembly in accordance with the preamble of claim 1.

The present invention is set out in the independent claim, with some optional features set out in the claims dependent thereto.

### BRIEF DESCRIPTION OF THE DRAWINGS

For a more complete understanding of the present invention, reference is now made to the following descriptions taken in conjunction with the accompanying drawings, in which:
FIGURE 1 depicts a lap joint assembly according to an embodiment of the present invention;
FIGURE 2 depicts another embodiment of a lap joint assembly of the present invention;
FIGURE 3 depicts a prior art mandrel joint design; and

### BRIEF SUMMARY OF THE INVENTION

The invention is defined by claim 1.

Embodiments of the present invention provide a mandrel joint configuration including a lap joint affixing a first mandrel face sheet of a first mandrel segment to a second mandrel face sheet of a second mandrel segment, wherein mandrel segments are split at stringer centerlines through the cap or in the middle of the hat of the stringer. Further embodiments preferably incorporate a backside bag wherein a seal formed between the first mandrel face sheet and the second mandrel face sheet is isolated. The backside bag is preferably positioned at the visible overlap line between the first mandrel face sheet and the second mandrel face sheet. Accordingly, potential problems with seals being formed between mandrel face sheets may be isolated, and the seal integrity during the production process is preferably maintained.

The present invention provides a lap joint assembly including a first mandrel face sheet and a second mandrel face sheet wherein the second mandrel face sheet is preferably aligned to form a lap joint with the first mandrel face sheet. A seal plane is preferably embedded between the first mandrel face sheet and the second mandrel face sheet. Further embodiments preferably provide that the mandrel comprised of the first mandrel face sheet and the second mandrel face sheet is split at a stringer centerline through a cap of the stringer. Accordingly, the placement of the split at the stringer centerline minimizes mark-off impact. In other embodiments, the configuration of the lap joint provides a gap between mandrel segments forming a mandrel, whereby tolerances are achieved without affecting the seal plane. The lap joint is preferably positioned parallel to a mold surface, and the first mandrel face sheet and second mandrel face sheet lie flat against each other protecting the seal plane embedded between the face sheets.

The foregoing has outlined rather broadly the features and technical advantages of the present invention in order that the detailed description of the invention that follows may be better understood. Additional features and advantages of the invention will be described hereinafter which form the subject of the claims of the invention. It

The novel features which are believed to be characteristic of the invention, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present invention.

### BRIEF DESCRIPTION OF THE DRAWINGS

For a more complete understanding of the present invention, reference is now made to the following descriptions taken in conjunction with the accompanying drawings, in which:

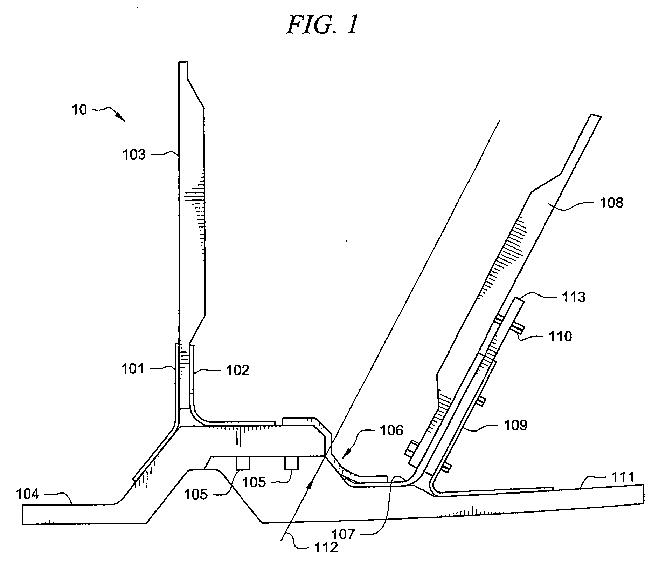

FIGURE 1 depicts a lap joint assembly according to an embodiment of the present invention;

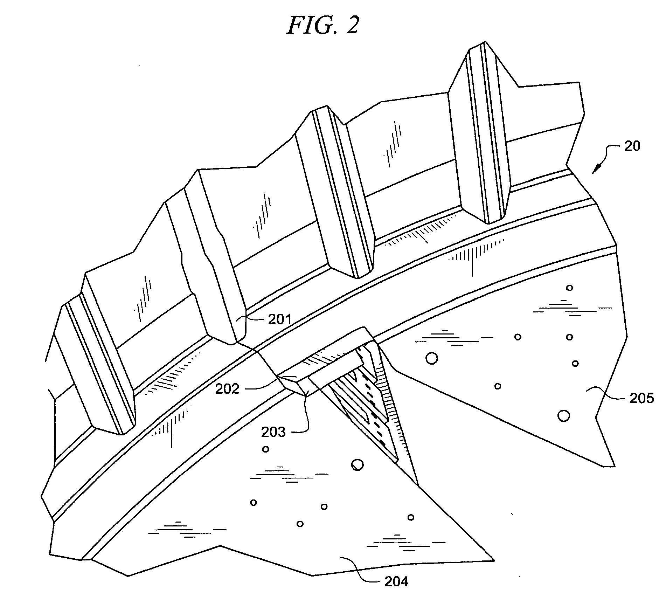

FIGURE 2 depicts another embodiment of a lap joint assembly of the present invention;

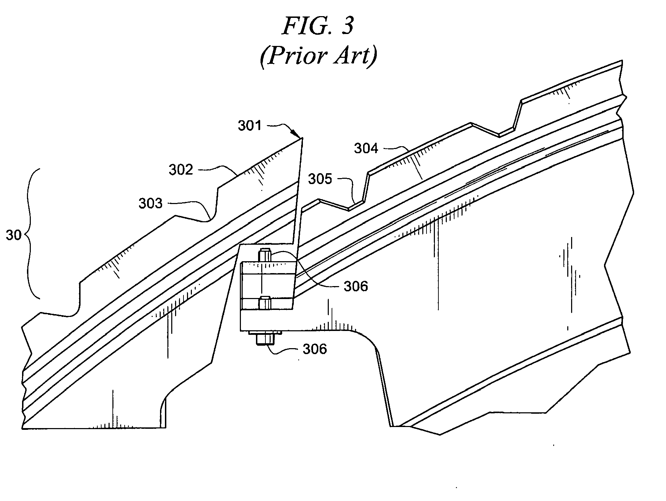

FIGURE 3 depicts a prior art mandrel joint design; and

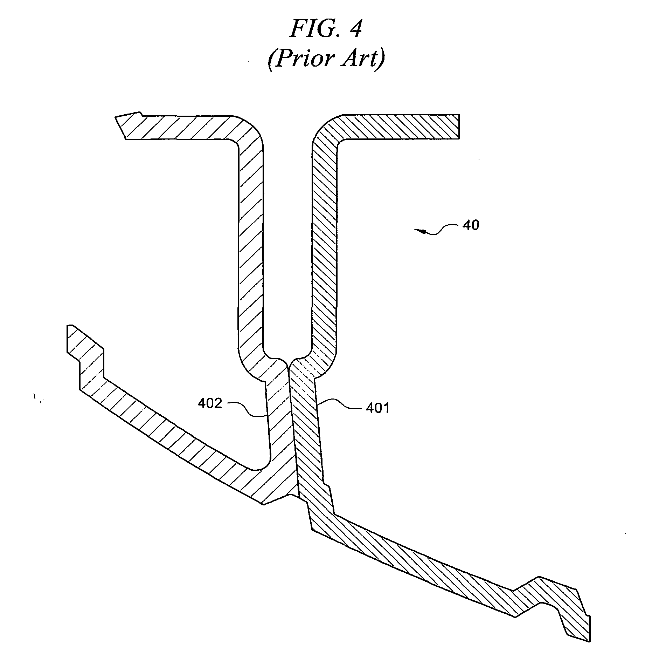

FIGURE 4 depicts an embodiment of a prior art butt joint assembly.

### DETAILED DESCRIPTION OF THE INVENTION

The present invention provides an automated fiber placement mandrel joint configuration where the joint is preferably parallel to the mold surface. This enables the user to shim the mandrel segments without otherwise affecting the integrity of the seal. In a preferred embodiment, a lap joint is utilized wherein the stringer is split at the centerline of the hat or through the cap of the stringer. The lap joint is preferably designed such that the face sheets of the mandrel segments preferably lie flat on top of one another when placed in contact. The seal plane is thus protected. Accordingly, it is desirable to turn to use of lap joints which join two pieces of material together by overlapping the pieces. These joints have not typically been used in the past to join mandrel segments.

FIGURE 1 depicts lap joint assembly 10 according to an embodiment of the present invention. Mandrel face sheets 104, 111 are aligned so as to form the lap joint wherein seal planes 105 are prevented from being rolled during assembly of the mandrel and production using same. Seal planes 105 become embedded between face sheets 104, 111, and accordingly the integrity of the seals is maintained. Embodiments of the lap joint configuration improve upon prior art use of butt joints such as that depicted in FIGURE 4 wherein prior art butt joint assembly 40 is comprised of face sheets 401, 402. When face sheets 401, 402 are joined together, the joining occurs by sliding face sheet 401 onto face sheet 402. Although the seal planes are not depicted in FIGURE 4, the seal planes would be positioned where face sheets 401, 402 meet. As face sheets 401, 402 are slid together to form the butt joint, the seal planes also are more apt to slide. As such, lap joint assembly 10 of FIGURE 1 is preferable to prior art butt joint configurations in that the seal integrity can be maintained and less mark-off impact is preferably experienced.

Returning to FIGURE 1, attachment planes 101, 102 affix mandrel substructure 103 to mandrel face sheet 104. Similarly, attachment planes 107, 109 affix mandrel substructure 108 to face sheet 111. However, mandrel substructure 108 is preferably affixed to attachment plane 107 which is strengthened and further stabilized by incorporation of reinforcement plate 113. Reinforcement plate 113 is preferably positioned between attachment planes 107, 109 and fastened by metal fasteners 110. Reinforcement plate 113 is a loose piece of substructure, and while it is not required to be included as part of lap joint assembly 10, its incorporation preferably gives added strength and stability to mandrel substructure 108.

Extraction direction 112 preferably shows the path for separating mandrel face sheets from one another. Accordingly, when face sheets 104, 111 forming the lap joint are to be pulled apart at the conclusion of production, face sheet 104 is preferably removed from alignment with face sheet 111 in the path of extraction direction 112. This serves to minimize mark-off impact and maintain seal integrity.

Returning to FIGURE 1, another benefit provided by lap joint assembly 10 is the manner in which the assembly provides for use of a back side bag which has been critical to successes in barrel curing. A backside bag location is preferably incorporated as part of the assembly as a means to isolate the split in the centerline of the stringer (which will be discussed in further detail with regard to FIGURE 2) from autoclave pressure and to provide a failsafe method for preserving seal integrity even when the seal grooves may not always work properly in operation. If a seal, such as seal plane 105, happens not to operate correctly and air from the autoclave invades the barrel being produced through the backside of the assembled mandrel, use of a backside bag is preferable. Backside bag location 106 indicates the position where a backside bag would preferably be located. In an embodiment of the present invention, the backside bag is preferably positioned at the point where the overlap between face sheets 104, 111 is visible (i.e., backside bag location 106). This backside bag preferably allows for a bag to be run in order to isolate an entire seal that may be malfunctioning. Thus, seals that are not operating properly during the production process may be preferably eliminated by inclusion of a backside bag. In order to incorporate the backside bag according to embodiments of the present invention, the mandrel is preferably designed and packaged in a way so that there may be enough physical space to include the backside bag as part of lap joint assembly 10.

FIGURE 2 depicts another view of a lap joint assembly according to an embodiment of the present invention. Lap joint assembly 20 depicts a stringer split into halves so as to illustrate how the centerline split of the stringer occurs between first half stringer 204 and second half stringer 205. Stringer centerline 201 is positioned in hat portion 203 splitting first half stringer 204 and second half stringer 205. This is in contrast to splitting between stringers as was done in the prior art (see, e.g., FIGURE 3).

Having the stringer of a mandrel segment split in the middle of the hat also is beneficial for production and assembly using a mandrel. This configuration preferably allows for shimming or minor adjustments to be made to the assembled mandrel without disrupting the overall assembly of the mandrel. The mandrel may then preferably be assembled, and through laser assessment, measurements may be made to determine how closely the mandrel adheres to engineering configurations. Mark-off impact is minimized for the stringer because stringer centerline 201 is positioned in a less critical area of the stringer. The split in the stringer cap minimizes the mark-off impact. If the split occurs through the top of the hat, the whole stringer can be replaced or it can be repaired, and thus not a large impact is felt. Further, if any imperfections occur in the mandrel segments due to the split, it is preferable for them to occur at the top of the stringer as opposed to the critical part of the skin.

Similar to FIGURE 1, face sheets 202, 203 of FIGURE 2 are configured as a lap joint wherein the face sheets are aligned. By having this type of joint included in the assembled mandrel, it becomes possible to adjust and position the mandrel segments within very close tolerances that are more acceptable to the industry when compared to alignment previously offered by use of butt joints. This lap joint configuration minimizes seal drag which improves seal performance. When face sheet 202 and face sheet 203 are aligned, the seal formed between face sheets 202, 203 is compressed and embedded, and thus, the seal is maintained. Accordingly, this lap joint configuration preferably encourages seal robustness and longevity.

The lap joint configuration according to embodiments of the present invention also preferably allows for diametric rework without affecting seal performance, which is of great value to the mandrel tolerance success. If the diameter of the mandrel is not perfect, then shims can be added to increase or otherwise alter the diameter as needed. Because the face sheets comprising the lap joint, such as face sheets 104, 111 as depicted in FIGURE 1, are lying on top of each other, the configuration of lap joint assembly 10 provides a slightly increased gap between mandrel segments forming the assembled mandrel according to embodiments of the present invention. Accordingly, the stringer can be made a little bit larger as opposed to configuring a larger gap that has to be sealed. Thus, lap joint assembly 10 preferably allows for the desired tolerances to be achieved without sacrificing the ability of the mandrel segments to be sealed during the production process.

The seal plane is parallel to the inner surface of assembly (ISA) surface which is typically the bolted inner surface of the airplane. By having the seal plane parallel to the ISA surface, this allows for adjustments to be made to position the mandrel segments in the preferred placement. This is particularly important when the mandrel segments may not be fully assembled at a single location. Thus, when it becomes time for the mandrel segments to be fully assembled, it is preferable to be able to do the measurements and shim the mandrel segment to get it in the proper placement for use without having to overtly modify the mandrel segment due to the type of joint used or the positioning of the split.

FIGURE 2 depicting the split of mandrel segments at the stringer centerline provides a marked contrast to the prior art mandrel joint design depicted in FIGURE 3. Stringers 303, 305 and areas 302, 304 in between the stringers are depicted in FIGURE 3. Mandrel joint 30 shows split 301 which indicates how the mandrel segments were typically split between stringers 303, 305 in area 302 in the prior art, and bolts 306 were used to fasten the mandrel segments together. FIGURE 3 depicts a prior art lap joint assembly, but the positioning of split 301 between stringers results in a configuration that is less desirable and presents challenges with respect to making alterations to the mandrel during assembly and production. Thus, according to embodiments of the present invention, the mandrel would be preferably split in either stringer 303 or 305.

It should be appreciated that the concept of lap joints have been used in the past for assembly and production purposes. However, when a lap joint assembly according to embodiments of the present invention is combined with a change in where the mandrel segments should be split (i.e., preferably splitting through the centerline of the stringer), an improved joint configuration is achieved. Further, when a backside bag configuration is additionally incorporated into the lap joint assembly, added improvements in seal integrity and durability may be preferably achieved.

## Claims

1. A mandrel assembly (10) for forming a fuselage structure, the assembly comprising:
a plurality of stringers;
a first mandrel segment naving a first mandrel face sheet (104);
a second mandrel segment having a second mandrel
face sheet (111); **characterized by** a lap joint affixing the first mandrel face sheet to the second mandrel face sheet for joining the first mandrel segment to the second mandrel segment along
a stringer centerline (201), wherein the lap joint joining the first mandrel segment to the second mandrel segment at a stringer centerline that extends through a stringer cap or a middle of the stringer;
wherein the lap joint is formed by an overlap of the second mandrel face sheet (111) by the first mandrel face sheet (104), the mandrel assembly further comprising:
a seal between said first mandrel face sheet and said second mandrel face sheet at the overlap.

2. The mandrel assembly (10) of claim 1, further comprising a backside bag positioned at the visible overlap for isolating the seal.

3. The mandrel assembly (10) of claim 1, wherein said lap joint is positioned parallel to a mold surface; first mandrel face sheet (104) and said second mandrel face sheet (111) lie flat against each other at said overlap for protecting said seal; said seal plane formed between said first and second mandrel segments.

4. The mandrel assembly (10) of claim 1 further comprising:
at least one first attachment plane (101, 102) attaching said first mandrel face sheet to a first mandrel substructure (103) and at least one second attachment plane (107, 109) attaching said second mandrel face sheet to a second mandrel subtructure (108).

5. The mandrel assembly (10) of claim 4 further comprising:
a reinforcement plate (113) affixed to said first attachment plane (101) and said at least one second attachment plane (107).

## Patentansprüche

1. Dornbaugruppe (10) zum Bilden einer Rumpfstruktur, wobei die Baugruppe aufweist:
eine Mehrzahl von Längsversteifungen;
ein erstes Dornsegment mit einer ersten Dornaußenplatte (104);
ein zweites Dornsegment mit einer zweiten Dornaußenplatte (111);
**gekennzeichnet durch**
eine Überlappungsverbindung, die die erste Dornaußenplatte an der zweiten Dornaußenplatte befestigt, um das erste Dornsegment mit dem zweiten Dornsegment entlang einer Längsversteifungs-Mittellinie (201) zu verbinden,
wobei die Überlappungsverbindung das erste Dornsegment mit dem zweiten Dornsegment an einer Längsversteifungs-Mittellinie verbindet, die sich **durch** einen Längsversteifungsabschluss oder eine Mitte der Längsversteifung erstreckt;
wobei die Überlappungsverbindung mittels einer Überlappung der zweiten Dornaußenplatte (111) **durch** die erste Dornaußenplatte (104) gebildet wird, wobei die Dornbaugruppe außerdem aufweist:
eine Dichtung zwischen der ersten Dornaußenplatte und der zweiten Dornaußenplatte an der Überlappung.

2. Dornbaugruppe (10) nach Anspruch 1, außerdem aufweisend eine Rückseitentasche, die an der sichtbaren Überlappung zum Isolieren der Dichtung positioniert ist.

3. Dornbaugruppe (10) nach Anspruch 1, wobei die Überlappungsverbindung parallel zu einer Formoberfläche positioniert ist; wobei die erste Dornaußenplatte (104) und die zweite Dornaußenplatte (111) an der Überlappung flach aneinander anliegen, um die Dichtung zu schützen; wobei die Dichtungsebene zwischen dem ersten und dem zweiten Dornsegment gebildet ist.

4. Dornbaugruppe (10) nach Anspruch 1, außerdem aufweisend:
mindestens eine erste Befestigungsebene (101, 102), die die erste Dornaußenplatte an einer ersten Dorn-Unterstruktur (103) befestigt, und mindestens eine zweite Befestigungsebene (107, 109), die die zweite Dornaußenplatte an einer zweiten Dorn-Unterstruktur (108) befestigt.

5. Dornbaugruppe (10) nach Anspruch 4, außerdem aufweisend:
eine Verstärkungsplatte (113), die an der ersten Befestigungsebene (101) und der mindestens einen zweiten Befestigungsebene (107) befestigt ist.

## Revendications

1. - Ensemble mandrin (10) pour former une structure de fuselage, l'ensemble comprenant :
une pluralité de lisses ;
un premier segment de mandrin ayant une première tôle de surface de mandrin (104) ;
un second segment de mandrin ayant une seconde tôle de surface de mandrin (111) ; **caractérisé par**
un joint à recouvrement fixant la première tôle de surface de mandrin à la seconde tôle de surface de mandrin pour assembler le premier segment de mandrin au second segment de mandrin le long d'un axe de lisse (201),
le joint à recouvrement assemblant le premier segment de mandrin au second segment de mandrin au niveau d'un axe de longeron qui s'étend à travers un talon de lisse ou un milieu de la lisse ;
le joint à recouvrement étant formé par un chevauchement de la seconde tôle de surface de mandrin (111) par la première tôle de surface de mandrin (104), l'ensemble mandrin comprenant en outre :
un joint d'étanchéité entre ladite première tôle de surface de mandrin et ladite seconde tôle de surface de mandrin au niveau du chevauchement.

2. - Ensemble mandrin (10) selon la revendication 1, comprenant en outre une poche arrière positionnée au niveau du chevauchement visible pour isoler le joint d'étanchéité.

3. - Ensemble mandrin (10) selon la revendication 1, dans lequel ledit joint à recouvrement est positionné parallèle à une surface de moule ; ladite première tôle de surface de mandrin (104) et ladite seconde tôle de surface de mandrin (111) reposent à plat l'une contre l'autre au niveau dudit chevauchement pour protéger ledit joint d'étanchéité ; ledit plan de joint d'étanchéité est formé entre lesdits premier et second segments de mandrin.

4. - Ensemble mandrin (10) selon la revendication 1, comprenant en outré :
au moins un premier plan de fixation (101, 102) fixant ladite première tôle de surface de mandrin à une première sous-structure de mandrin (103) et au moins un second plan de fixation (107, 109) fixant ladite seconde tôle de surface de mandrin à une seconde sous-structure de mandrin (108).

5. - Ensemble mandrin (10) selon la revendication 4, comprenant en outre :
une plaque de renforcement (113) fixée audit premier plan de fixation (101) et audit au moins un second plan de fixation (107).
